# EUROPEAN PATENT APPLICATION

(11) **EP 4 554 167 A1**
(43) Date of publication of application: **14.05.2025**
(21) Application number: 23839995.0
(22) Date of filing: 13.07.2023
(51) Int. Cl.: H04L 41/0894, H04L 41/082, H04W 8/02, H04W 48/18

(54) **METHOD AND DEVICE FOR UPDATING TERMINAL POLICY FOR CONTINUITY OF NETWORK SLICE SERVICE IN WIRELESS COMMUNICATION SYSTEM**

(30) Priority: 14.07.2022 KR 20220087218
(71) Applicant: Samsung Electronics Co., Ltd., Suwon-si, Gyeonggi-do 16677 (KR)
(72) Inventor: SUH, Dongeun, Suwon-si, Gyeonggi-do 16677 (KR)
(74) Representative: Gulde & Partner
(86) International application number: PCT/KR2023/010033
(87) International publication number: WO 2024/014904

(57) **Abstract**

The present disclosure relates to a method and a device for efficiently updating a terminal policy for continuity of a network slice service in a wireless communication system, and the AMF method in a wireless communication system supporting a network slice, according to an embodiment of the present disclosure, comprises steps in which the AMF: receives a registration request message from a terminal; selects a first PCF supporting remapping of a network slice that is related to the terminal; transmits, to the first PCF, a first policy control request message including information indicating whether the network slice remapping is supported by the first PCF in the AMF; and receives, from the first PCF, in response to the transmission of the first policy control request message, a first policy control response message including first trigger information related to the network slice remapping, wherein, in case that at least one first network slice requiring the network slice remapping occurs in the AMF, the first trigger information instructs the AMF to transmit, to the first PCF, information about the at least one first network slice.

## Description

### [Technical Field]

The disclosure relates to a method and device for supporting continuity of a network slice service in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G.

In the initial stage of 5G mobile communication technologies, in order to support services and to satisfy performance requirements in connection with enhanced Mobile BroadBand, (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there is ongoing discussion regarding improvement and performance enhancement of initial 5G mobile communication technologies in view of services to be supported by 5G mobile communication technologies, and there has been physical layer standardization regarding technologies such as V2X for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is impossible, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR, VR, and the like (XR = AR + VR + MR), 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

The disclosure provides a method and device for efficiently updating a user equipment (UE) policy for continuity of a network slice service in a wireless communication system.

In addition, the disclosure provides a method and device for network slice remapping in a wireless communication system.

In addition, the disclosure provides a method and device for network slice remapping in a UE registration procedure in a wireless communication system.

In addition, the disclosure provides a method and device for providing a PCR trigger based on an AM policy or a UE policy in a wireless communication system.

In addition, the disclosure provides a method and device for determining/selecting a new network slice for network slice remapping in a wireless communication system.

### [Technical Solution]

A method performed by an AMF in a wireless communication system that supports a network slice according to an embodiment of the disclosure may include an operation of receiving, by the AMF, a registration request message from a user equipment (UE), an operation of selecting, by the AMF, a first policy control function (PCF) that supports network slice remapping related to the UE, an operation of transmitting, by the AMF to the first PCF, a first policy control request message including information indicating, to the first PCF, whether the AMF supports the network slice remapping, and an operation of receiving, by the AMF from the first PCF, a first policy control response message including first trigger information related to the network slice remapping in response to the transmission of the first policy control request message, and the first trigger information indicates that, in case that at least one first network slice that requires the network slice remapping occurs in the AMF, the AMF needs to transmit information associated with the at least one first network slice to the first PCF.

In addition, an AMF in a wireless communication system that supports a network slice according to an embodiment of the disclosure may include a transceiver, and a processor configured to receive a registration request message from a user equipment (UE) via the transceiver, to select a first policy control function (PCF) that supports network slice remapping related to the UE, to transmit, to the first PCF via the transceiver, a first policy control request message including information indicating, to the first PCF, whether the AMF supports the network slice remapping, and to receive, from the first PCF via the transceiver, a first policy control response message including first trigger information related to the network slice remapping in response to the transmission of the first policy control request message, and the first trigger information indicates that, in case that at least one first network slice that requires the network slice remapping occurs in the AMF, the AMF needs to transmit information associated with the at least one first network slice to the first PCF.

In addition, a method performed by a first PCF in a wireless communication system that supports a network slice according to an embodiment of the disclosure may include an operation of receiving, by the first PCF that supports network slice remapping, a first policy control request message including information indicating whether an access and mobility management function (AMF) supports the network slice remapping from the AMF that receives a registration request message from a user equipment (UE), and an operation of transmitting, by the first PCF, a first policy control response message including first trigger information related to the network slice remapping to the AMF in response to the reception of the first policy control request message, and the first trigger information indicates that, in case that at least one first network slice that requires the network slice remapping occurs in the AMF, the AMF needs to transmit information associated with the at least one first network slice to the first PCF.

In addition, a first PCF in a wireless communication system that supports a network slice according to an embodiment of the disclosure may include a transceiver, and a processor configured to receive, via the transceiver, a first policy control request message including information indicating whether an access and mobility management function (AMF) supports network slice remapping from the AMF that receives a registration request message from a user equipment (UE), and to transmit, via the transceiver, a first policy control response message including first trigger information related to the network slice remapping to the AMF in response to the reception of the first policy control request message, and the first trigger information indicates that, in case that at least one first network slice that requires the network slice remapping occurs in the AMF, the AMF needs to transmit information associated with the at least one first network slice to the first PCF.

### [Brief Description of Drawings]

FIG. 1 is a diagram illustrating a network structure for a 5G system;
FIG. 2 is a diagram illustrating a method of installing an AM policy-based PCR trigger in order to support slice remapping in a UE registration procedure according to an embodiment of the disclosure;
FIG. 3 is a diagram illustrating a method of determining a new network slice via an AM policy procedure when a network slice that requires remapping occurs according to an embodiment of the disclosure;
FIG. 4 is a diagram illustrating a method of installing a UE policy-based PCR trigger in order to support slice remapping in a UE registration procedure according to an embodiment of the disclosure;
FIG. 5 is a diagram illustrating a method of determining a new network slice via a UE policy procedure when a network slice that requires remapping occurs according to an embodiment of the disclosure;
FIG. 6 is a diagram illustrating a method of reporting a change of an allowed NSSAI to a H-PCF via a UE policy procedure when the allowed NSSAI is changed according to an embodiment of the disclosure;
FIG. 7 is a diagram illustrating a method of determining, by a (V-)PCF, a new network slice via a UE policy procedure when a network slice that requires remapping occurs according to an embodiment of the disclosure;
FIG. 8 is a diagram illustrating a method of installing a UE policy-based PCR trigger in order to support AMF-based slice remapping in a UE registration procedure according to an embodiment of the disclosure; and
FIG. 9 is a diagram illustrating a configuration of a network entity in a wireless communication system according to an embodiment of the disclosure.

### [Mode for Carrying out the Invention]

Hereinafter, embodiments of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order).

In the disclosure, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description of the disclosure, terms and names defined in 5GS and NR standards, which are the standards specified by the 3rd generation partnership project (3GPP) group among the existing communication standards, will be used for the sake of descriptive convenience. However, the disclosure is not limited by these terms and names, and may be applied in the same way to systems that conform other standards. The disclosure may be applied to the 3GPP 5GS/NR (5th generation mobile communication standards).

In the following description, a base station is an entity that allocates resources to terminals, and may be at least one of an eNode B, a Node B, a base station (BS), a radio access network (RAN), an access network (AN), a RAN node, a wireless access unit, a base station controller, and a node on a network. A user equipment (UE) may be at least one of a terminal, a mobile station (MS), a cellular phone, a smartphone, a computer, or a multimedia system capable of performing a communication function.

The 5G system supports technology called a session and service continuity (SSC) mode that supports session continuity for the purpose of improving a UE's quality-of-experience (QoE) or supporting a mission critical service. SSC includes three modes, which are SSC mode 1, 2, and 3, and the 5G system may configure one of the SSC mode 1, 2, and 3 for a protocol data unit (PDU) session. For example, in SSC mode 1, a user plane function (UPF) that acts as an anchor of a PDU session is maintained until a user equipment (UE) releases the PDU session. In SSC mode 2, when an existing PDU session for a UE is released and a new PDU session is established in the 5G system, a UPF that acts as an anchor in the existing PDU session may be changed to another UPF in the new PDU session. In SSC mode 3, a PDU session may be applied only to an IP type, and when a UPF that acts as an anchor is changed to a new UPF, a connection to the new UPF may be established before a connection to the existing UPF is released. SSC mode 3 is technology referred to as make-before-break. When a network determines that a PDU session of SSC mode 3 that a UE is using needs to be released, the network may establish a new PDU session capable of replacing the existing PDU session and release the existing PDU session, so as to support session continuity. Before the existing PDU session is released, the UE moves traffic flows that is being transmitted/received via the existing PDU session to the new PDU session, so as to maintain session continuity.

In the 5G system, network slicing technology (network slicing) is the technology and structure that enable various virtualized and independent logical networks in a single physical network. To satisfy specified requirements of a service/application, a network operator may configure a virtual end-to-end network called a network slice, and may provide a service. For example, the network operator may configure network slice A in order to provide a mobile broadband service, may configure network slice B in order to provide a vehicle communication service, and may configure network slice C in order to provide a broadcasting service. That is, as described above, in the 5G system, the corresponding service may be efficiently provided to a UE via a network slice specialized for the characteristics of each service.

The network slice is identified by an identifier called single-network slice selection assistance information (S-NSSAI), and the network operator may provide a service to a UE using a network slice(s). In the disclosure, "slice" is a term indicating "network slice" and they are interchangeably used. In the network environment, when receiving various services, a UE may access a plurality of network slices. The network operator may configure the network slices, and may allocate a network resource suitable for a predetermined service for each network slice or for each network slice set. The network resource may be an NF or a logical resource provided by the NR, or a radio resource allocation by a base station or the like.

In a network registration procedure, a UE transmits identifier information associated with a network slice(s) that the UE requests (e.g., requested S-NSSAIs) to an access and mobility management function (AMF), and the AMF provides, to the UE, information associated with a network slice(s) available for the UE (e.g., an allowed NSSAI) in consideration of the requested S-NSSAIs, subscriber information, and the like. Although the UE does not provide the information associated with the requested network slice(s) to the AMF, the AMF may provide the allowed NSSAI to the UE. In this instance, the allowed NSSAI may include information (e.g., default configured NSSAI) associated with a default configured network slice(s), and information (e.g., default subscribed S-NSSAIs) associated with a network slice(s) configured as a default among a subscribed network slice(s) included in UE subscriber information.

When any network slice is incapable of being included in the allowed NSSAI (e.g., when the default configured NSSAI and/or the default subscribed S-NSSAIs is not present or unavailable), the AMF may transmit, to the UE, a network registration reject message together with a cause code indicating that the reason of the rejection is that no available slice is present.

In order to include a slice in the allowed NSSAI of the UE, an admission control (network slice admission control (NSAC)) procedure and an authentication (network slice-specific authentication and authorization (NSSAA)) procedure may be performed on the corresponding slice in the 5G system. In the NSAC procedure, whether to allow a predetermined network slice may be determined (e.g., whether to include the corresponding network slice in the allowed NSSAI may be determined) based on the number of UEs that are currently registered in the predetermined network slice and the maximum number of registered UEs allowed for the corresponding network slice. In the NSSAA procedure, based on credential information associated with the corresponding network slice of the UE, an authentication procedure is performed with AAA-S that is a server that performs authentication of the corresponding slice via an NSSAA function (NSSAAF). In this instance, in consideration of an authentication result, whether to allow the corresponding network slice (e.g., whether to include the corresponding network slice in the allowed NSSAI) may be determined.

In order to perform data transmission or reception to a predetermined data network (DN) via an allowed network slice (s) (allowed NSSAIs), the UE may select one of the allowed network slice(s), may request, from the corresponding network slice, a packet data unit (PDU) session to a predetermined data network name (DNN), and may perform data transmission or reception via an established PDU session. The PDU session may include multiple traffic flows, and the traffic flows may include two types of flows, that is, a guaranteed bitrate quality-of-service flow (GBR QoS flow) and a non-GBR QoS flow.

In the 5G system, part of the network slice(s) that a UE is using by establishing a PDU session may become unavailable or may experience performance degradation although it is available (hereinafter, such network slice is referred to as a network slice that needs/requires remapping) due to congestion that occurs in a predetermined network slice(s), or by reason of a problem on operating (operation and management (OAM)) caused by failure/equipment replacement/upgrading of a predetermined network slice(s), or when a service level agreement (SLA) is not satisfied, which a network operator suggests to a 3^{rd} party in association with a network slice(s). In this instance, in the 5G system, there is need for a method of moving an existing PDU session(s) belonging to the corresponding network slice to another network slice (hereinafter, such network slice is referred to as a remapped network slice). In the disclosure, the method is referred to as network slice remapping. In this instance, a network slice(s) that requires remapping and a remapped network slice(s) may be determined for each UE, and securing session continuity is considered important. In addition, in the disclosure, when network slice remapping is performed, a rule (e.g., a UE route selection policy (URSP) rule in a UE policy) indicating whether a network slice for each traffic needs to be used may be updated, and then transmitted to a UE. The rule may be stored in a UE as configuration information. The UE route selection policy (URSP) may include an SSC mode selection policy, a network slice selection policy, a data network name (DNN) selection policy, a non-seamless offloading policy, an access type preference (preference for 3GPP or non-3GPP), and the like.

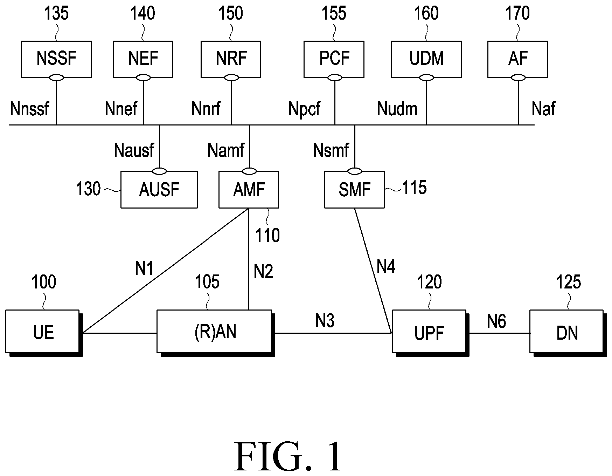

In the disclosure, the standards (e.g., TS 23.501, TS 23.502, TS 23.503, or the like) defined by 3GPP or international telecommunication union (ITU) may be referenced as the network technologies. Network entities included in the network structure of FIG. 1 described later may be physical entities, software performing individual functions, or hardware coupled with the software. The reference numeral N1, N2, N3,...,Nxxx, or the like in drawings are the publicly known interfaces between the NFs in the 5G core network (5GC).

In the 3GPP system, a conceptual link that connects network functions (NFs) in the 5G system is defined as a reference point. Examples of a reference point included in the 5G system architecture represented in FIG. 1 are as follows.
- N1: a reference point between a UE and an AMF
- N2: a reference point between a base station ((R)AN) and an AMF
- N3: a reference point between a base station ((R)AN) and a UPF
- N4: a reference point between a session management function (SMF) and a UPF
- N5: a reference point between a PCF and an application function (AF)
- N6: a reference point between a UPF and a data network (DN)
- N7: a reference point between an SMF and a policy control function (PCF)
- N8: a reference point between a user data management (UDM) and an AMF
- N9: a reference point between two core UPFs
- N10: a reference point between a UDM and an SMF
- N11: a reference point between an AMF and an SMF
- N12: a reference point between an AMF and an authentication server function (AUSF)
- N13: a reference point between a UDM and an AUSF
- N14: a reference point between two AMFs
- N15: a reference point between a PCF and an AMF in the case of a non-roaming scenario, and a reference point between a PCF and an AMF in a visited network in the case of a roaming scenario

FIG. 1 is a diagram illustrating a network structure for a 5G system.

The 5G system of FIG. 1 may include a 5G core network (5GC), a base station 105, and a user equipment (UE) 100. The 5GC may include an AMF 110 that manages mobility of the UE 100, an SMF 115 that manages a session, a UPF 120 that is connected to the data network (DN) 125 and performs data transferring, a network slice selection function (NSSF) 125 that selects a network slice to provide a service to the UE 100, an AUSF 130 that authenticates a network entity (or network entities) in the 5G system, a network exposure function (NEF) 140 that transfers an event occurring in the 5G system and supporting capability to the outside or receives the same from the outside, a network repository function (NRF) 150 that manages registration information of NFs, a PCF 155 that provides a policy control function of a network operator, and a UDM 160 that provides a data management function such as subscriber data, policy control data, or the like, and an AF 170 that provides an application service may communicate with the 5GC. The AMF 110 may be an entity for managing access and mobility of the UE 100. For example, the AMF 120 may perform a network function such as registration, connection, reachability, mobility management, access recognition, authentication, mobility event generation, or the like in association with the UE 100. The SMF 115 may perform a management function associated with a PDU session of a UE 101. For example, the SMF 135 may perform a session management function, such as session establishment, modification, release, and maintaining a tunnel between the UPF 120 and the base station 105, a function of allocating and managing an internet protocol (IP) address of the UE 100, a network function such as user plane selection and control, or the like. The UPF 120 may perform a data processing function that transfers data transmitted by the UE 100 to the DN 125 that is an external network or transfers data obtained from the DN 125 to the UE 100. In addition, the UPF 120 may perform a network function such as acting as an anchor between radio access technologies (RATs), providing a connection between a PDU session and the AF 170, packet routing and forwarding, packet inspection, applying a user plane policy, making a traffic usage report, buffering, or the like. The PCF 155 may manage operator policy information for providing a service in the 5G system, and the UDM 160 may perform a function such as generating authentication information for 3GPP security, managing a list of network functions (NFs) that support the UE 100, managing subscription information, and the like. In the example of FIG. 1, in a UE registration procedure, the UE 100 may transmit, to the AMF 120, identification information (requested S-NSSAIs) associated with network slices that the UE is to request, and the AMF 120 may provide, to the UE 100, information (allowed NSSAI) associated with a network slice that is allowed for the UE 100 in consideration of the requested S-NSSAIs, subscriber information, and the like. In order to perform data transmission or reception with respect to a predetermined data network (DN) via the allowed network slice(s) (allowed NSSAI(s)), the UE 100 may request generation of a PDU session to a data network name (DNN) associated with a network slice selected from among the allowed network slices, and may perform data transmission or reception via the generated PDU session.

In addition, different network slice identifier systems may be used for different network operators. Accordingly, in the case of a UE in a roaming state, a network slice identifier of the UE in a visited network (i.e., visited-public land mobile network (V-PLMN) S-NSSAI) and a slice identifier in a home network (e.g., a home-public land mobile network (H-PLMN) S-NSSAI) may have different systems. The UE in the roaming state may store, as configuration information, mapping information associated with a H-PLMN S-NSSAI(s) for each network slice in each network slice set, with respect to the allowed slice set (allowed NSSAI) and a configured slice set (configured NSSAI) in the visited network, and, based on the same, may apply a UE policy (e.g., a rule indicating which traffic needs to use which H-PLMN S-NSSAI's session) received from the home network.

In the embodiments of the disclosure, the PCF 155 is a network function that is in charge of policy and charging, and is classified as an access and mobility policy (AM policy) indicating a policy associated with UE access and mobility, a user equipment (UE) policy indicating a policy associated with a UE, and a session management (SM) policy indicating a policy associated with a session of a UE. When establishing AM policy association (or UE policy association) in order to control the AM policy (or UE policy) of the UE, the PCF 155 may perform, with respect to the AMF 110, installation/transmission of a policy control request (PCR) trigger indicating provision of predefined information to the PCF 155 when a predetermined condition is satisfied. When a triggering condition included in the installed/received PCF trigger is satisfied, the AMF 110 may perform a policy update request with respect to the PCF 155. The policy update request may include information predefined for each purpose of the PCR trigger.

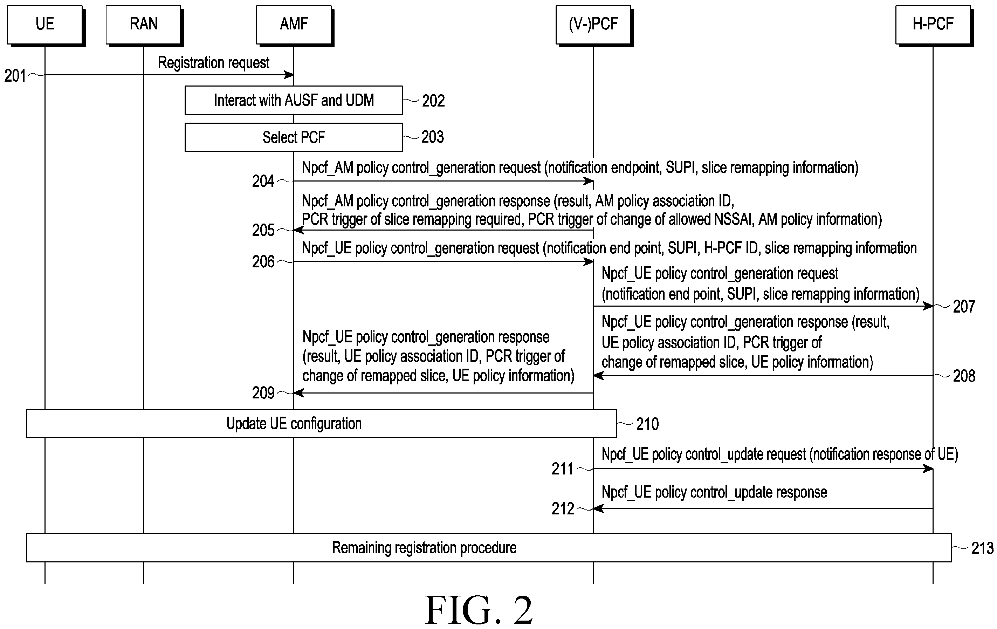

In the embodiments of the disclosure, with respect to a UE in a roaming state in the 5G system (e.g., in the situation in which a UE is using a service in a visited network different from a home network), in the case (a network slice congestion situation) in which congestion occurs in at least one of 5G network entity (5G network entities) in a control plane and/or user plane that constitutes a network slice) in a network slice(s) for each PDU session, in the case (an operation and management (OAM) case) in which the use of a predetermined network slice(s) needs to be stop temporarily or permanently due to a problem on operating in a network, in the case in which an SLA is not satisfied, in the case in which the use of the corresponding network slice(s) needs to be stop temporarily or permanently, a method of determining a new network slice(s) and a method of moving the whole or some of PDU sessions belonging to a predetermined network slice(s) to a target network slice (i.e., a network slice remapping method) are proposed. In addition, in an embodiment of the disclosure, when network slice remapping is performed with respect to a UE in a roaming state, a method of updating a rule (i.e., UE route selection policy (URSP) rule in a UE policy) indicating whether to use a network slice for each traffic, and stored as configuration information in the UE, is proposed. The fundamental features of each NF that involves in the procedures in the embodiments of FIGS. 2 to 8 may be understood by referring to the description of FIG. 1 that has been described above. A V-PCF and an H-PCF refer to a PCF of a visited network and a PCF of a home network, respectively, in the case in which a UE is in a roaming state, and a V-NRF and a H-NRF refer to an NRF of a visited network and an NRF of a home network, respectively.

In addition, in the case in which a UE is in a roaming state, an entity with the notation of (V-)PCF among network entities in FIGS. 2 to 8 refers to a V-PCF which is a PCF supporting slice remapping in a visited network. In the case in which a UE is not in a roaming state, the entity refers to a PCF that supports slice remapping.

FIG. 2 is a diagram illustrating a method of installing an AM policy-based PCR trigger in order to support slice remapping in a UE registration procedure according to an embodiment of the disclosure.

In operation 201, in the UE registration procedure, a UE transmits a registration request message via a base station (RAN) and the base station (RAN) transfers the registration request message to an AMF.

In operation 202, when authentication of the UE is needed, the AMF performs authentication of the UE via an AUSF and a UDM that have been described with reference to FIG. 1.

In operation 203, the AMF performs PCF selection.

In this instance, the AMF may perform PCF selection and discovery by taking into consideration whether a PCF supports slice remapping. The AMF may use an NRF (not illustrated) to perform reception (i.e., discovery) of information associated with a PCF(s) to be selected, or may utilize information associated with a PCF(s) stored as configuration information in the UE when selecting a PCF(s).

In this instance, in the case in which the AMF performs PCF discovery via the NRF, and requests information associated with a PCF from the NRF (e.g., in the case of requesting information by using an NF discovery request), the AMF may operate as follows. When the AMF supports slice remapping, the AMF may include, in a request message transmitted to the NRF, information for requesting a PCF that supports slice remapping. When the information requesting a PCF that supports slice remapping is included in the request message obtained from the AMF, the NRF may identify/select a PCF(s) that supports slice remapping, and may transmit, to the AMF, a response message including information associated with the PCF(s) that supports slice remapping. In addition, in the case in which the UE is in a roaming state, the AMF may transmit the request message including information for requesting a PCF that supports slice remapping to a V-NRF, and the V-NRF may transmit, to a H-NRF, the request message or the information for requesting a PCF that supports slice remapping, may receive information associated with a H-PCF from the H-NRF, and may transfer the same to the AMF.

The AMF may perform an AMF policy association establishment procedure with the PCF selected in operation 203.

In operation 204, the AMF may transmit, to the selected (V-)PCF, an AM policy control generation request message (Npcf_AMPolicyControl_Create Request) including at least one of a notification endpoint, an SUPI, and slice remapping information.

The notification endpoint indicates a network address of the AMF, and the subscription permanent identifier (SUPI) refers to a UE's identifier (i.e., a UE ID). The slice remapping information indicates whether the AMF supports slice remapping.

In operation 205, the (V-) PCF generates an AM policy association ID to identify AM policy association based on the information received from the AMF in operation 204, and may generate AM policy information.

In this instance, the (V-)PCF may request (in this instance, a UE ID is included in a request message) and receive subscription information associated with the UE from a UDR or UDM (not illustrated), and the received subscription information may include information indicating a substitution S-NSSAI available for each S-NSSAI.

Specifically, a response message (Npcf_AMPolicyControl_Create Response) that the (V-)PCF transmits to the AMF in operation 205 may include at least one of a result, an AM policy association ID, a PCR trigger of slice remapping required, a PCR trigger of a change of the allowed NSSAI, and AM policy information. The result refers to a result for a request for generating AM policy association, and may include a value indicating success or failure of the generation of the AM policy association.

The AM policy association ID refers to identifier information for identifying the generated AM policy association.

The information associated with the PCR trigger of slice remapping required may be information indicating that the AMF needs to report information associated with a network slice that requires remapping to the (V-)PCF in case that the network slice that requires remapping occurs.

When the AMF supports slice remapping, the (V-)PCF may include the information associated with the PCR trigger of slice remapping required in a AM policy control generation response message transmitted to the AMF.

When the UE is not in a roaming state, the AMF transmits, to the PCF, slice remapping information indicating whether slice remapping is supported. When the UE is in the roaming state, the AMF transmits, to the V-PCF, slice remapping information indicating whether slice remapping is supported.

When the information associated with the PCR trigger of slice remapping required is received, and a network slice that requires remapping occurs, the AMF may provide information associated with the network slice that requires remapping to the V-PCF based on the information associated with the PCR trigger of slice remapping required, and the V-PCF may determine a new network slice that is to replace the network slice that requires remapping. Subsequently, the V-PCF may provide the newly determined network slice information to the AMF.

The information associated with the PCR trigger of a change of the allowed NSSAI may be information indicating, by the (V-)PCF, that the AMF needs to report a change of the allowed NSSAI to the (V-)PCF when a change of the allowed NSSAI occurs.

When the information associated with the PCR trigger of a change of the allowed NSSAI from the (V-)PCF is received, the AMF may report a changed allowed NSSAI to the PCF when the allowed NSSAI (e.g., an allowed network slice identifier list) is changed.

When determining a new network slice for the network slice that requires remapping, the (V-)PCF may determine the new network slice based on the allowed NSSAI (or the changed allowed NSSAI). Therefore, when the (V-)PCF provides the information associated with the PCR trigger of slice remapping required to the AMF, the information associated with the PCR trigger of a change of the allowed NSSAI may also be provided.

The AM policy information is policy information, and the AMF may perform UE access and mobility management based on this information.

In operation 206, the AMF may determine to perform a UE policy association establishment procedure.

When a (V-)PCF selected in the AM policy association exists (i.e., the PCF selected in operation 203), the AMF may select the corresponding PCF and use the same for UE policy association. When a selected (V-)PCF does not exist, the PCF selection procedure of operation 203 may be performed.

In operation 206, the AMF may transmit, to the selected (V-)PCF, a UE policy control generation request message (Npcf_UEPolicyControl_Create Request) including at least one of a notification endpoint, an SUPI, a H-PCF ID, and slice remapping information.

The notification endpoint indicates a network address of the AMF, and the SUPI indicates a UE's identifier (i.e., a UE ID).

The H-PCF ID may be included in the UE policy control generation request message when the UE is in the roaming state, and may be identifier information of a H-PCF. When the UE is not in the roaming state, operation 209 is performed immediately after operation 206 in the example of FIG. 2, and operations 207 and 208 which are to be described below will be omitted.

The slice remapping information indicates whether the AMF supports slice remapping. The H-PCF may identify whether the AMF supports slice remapping based on the slice remapping information.

In operation 207, the V-PCF may transfer the UE policy control generation request message (Npcf_UEPolicyControl_Create Request) including the information received in operation 206 to a H-PCF corresponding to the H-PCF ID received from the AMF in operation 206.

In operation 208, based on the information received from the AMF, the H-PCF generates a UE policy association ID to identify UE policy association, and may generate UE policy information.

In this instance, although not illustrated in FIG. 2, the H-PCF may request subscription information associated with the UE from a UDR or UDM (in this instance, a UE ID is included in a request message), and may receive the subscription information associated with the UE.

Specifically, a UE policy control generation response message (Npcf_UEPolicyControl_Create Response) that the H-PCF transmits to the AMF via the (V-)PCF in operations 208 and 209 may include at least one of a result, a UE policy association ID, a PCR trigger of a change of remapped slice, and UE policy information.

The result refers to a result for the request for generating UE policy association in operation 207, and may include a value indicating success or failure of the generation of the UE policy association.

The UE policy association ID refers to identifier information for identifying the generated UE policy association.

The PCR trigger of a change of a remapped slice is information for indicating/triggering the AMF's reporting of a network slice that requires remapping and a newly determined network slice to the PCF when the new network slice is determined for the network slice that requires remapping. The new network slice may be determined by the V-PCF and may be transferred to the AMF.

When the AMF supports slice remapping, the H-PCF may include at least one of the result, the UE policy association ID, the PCR trigger of a change of a remapped slice, and the UE policy information in the UE policy control generation response message transmitted to the AMF via the (V-)PCF.

In the embodiment of the disclosure, when the UE is not in the roaming state, the AMF may report information associated with a network slice that requires remapping and a newly determined network slice to the PCF, and when the UE is in the roaming state, the AMF may report information associated with a network slice that requires remapping and a newly determined network slice to the V-PCF.

After the information associated with the PCR trigger of a change of a remapped slice is received and a new network slice for the network slice that requires remapping is determined, the AMF may report information associated with the network slice that requires remapping and the newly determined network slice to the H-PCF via the V-PCF.

The H-PCF may update the UE policy information based on the information received via the V-PCF, and may transmit the same to the UE.

In operation 209, the (V-)PCF may transfer, to the AMF, the UE policy control generation response message including the information received from the H-PCF.

When the UE is not in the roaming state, the (V-)PCF may act as a H-PCF in FIG. 2. In this instance, the (V-)PCF may operate in the same manner as the H-PCF of operation 208 and generate the above information, and the generated information may be included in the UE policy control generation response message transferred to the AMF.

In operation 210, a UE configuration update procedure is performed. In this instance, the AMF may transmit, to the UE via the base station (RAN), a UE policy container including the UE policy information received from the (V-)PCF.

Based on network slice selection policy (NSSP) information included in a URSP rule in the UE policy information, the UE may determine which S-NSSAI and DNN's PDU session to use for application traffic transmission.

In operation 211, when the (V-)PCF receives, from the UE, a notification response indicating reception of the UE policy container, the (V-)PCF may transmit a UE policy control update request message indicating the notification response to the H-PCF.

In operation 212, the H-PCF may transmit a UE policy control update response message to the (V-)PCF in response to the UE policy control update request message of operation 211.

In operation 213, the remaining UE registration procedure may be performed.

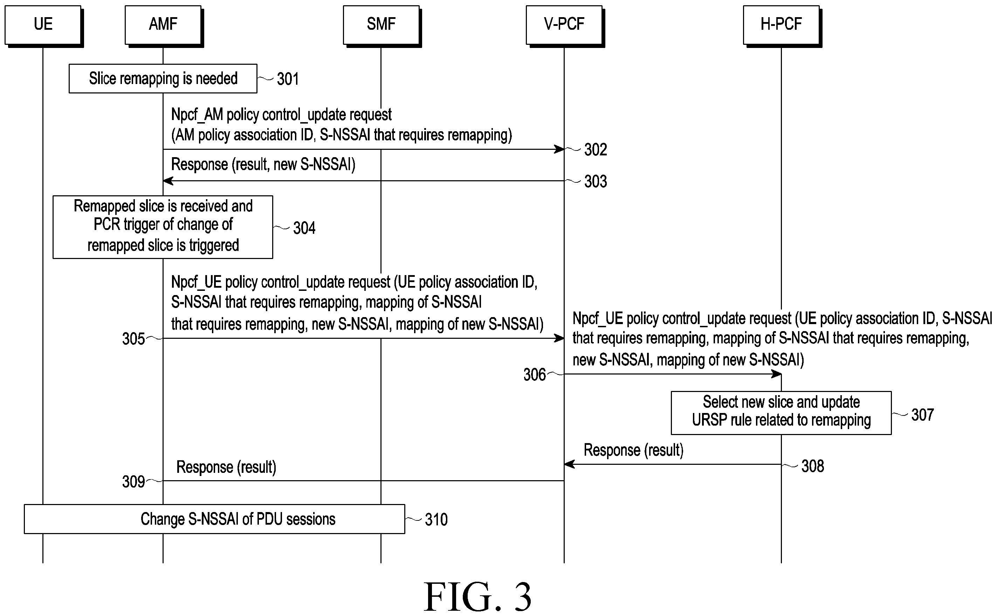

FIG. 3 is a diagram illustrating a method of determining a new network slice via an AM policy procedure when a network slice that requires remapping occurs according to an embodiment of the disclosure. In the embodiment of FIG. 3, it is assumed that an AMF has already received, from a (V-)PCF, the information associated with a PCR trigger of slice remapping required, a PCR trigger of a change of the allowed NSSAI information, and a PCR trigger of a change of remapped slice information which have been described with reference to the embodiment of FIG. 2. Therefore, the embodiment of FIG. 3 may be combined with the embodiment of FIG. 2.

In operation 301, the AMF recognizes that a situation that requires slice remapping has occurred (the situation that requires slice remapping may include, for example, the case in which an unavailable network slice occurs, the case in which a congested network slice occurs, the case in which a network slice planned to be terminated due to OAM occurs, the case in which a network slice that fails to satisfy an SLA occurs, or the like).

In operation 302, upon recognition of the situation that requires slice remapping in operation 301, when the information associated with the PCR trigger of slice remapping required received from the V-PCF exists (i.e., upon receiving, from the V-PCF, information indicating that reporting to the V-PCF is needed when a situation that requires slice remapping occurs), the AMF may transmit, to the V-PCF, an AM policy control update request message (Npcf_AMPolicyControl_Update Request) including at least one of an AM association ID, a VPLMN S-NSSAI, an unavailable slice indicator, an allowed NSSAI, or a mapping of the allowed NSSAI.

The AM policy association ID may be an identifier that identifies the AM policy association established with a PCF with respect to a UE.

Information associated with an S-NSSAI that requires remapping, which has been described in advance, is information associated with a network slice that requires remapping, and the information associated with the S-NSSAI that requires remapping may include at least one of the VPLMN S-NSSAI and the unavailable slice indicator. The VPLMN S-NSSAI is identifier information associated with a network slice that requires remapping, and the unavailable slice indicator is an indicator indicating a network slice that requires remapping. For example, in the case in which the VPLMN S-NSSAI is included in the AM policy control update request message in a predetermined manner, and indicates a network slice that requires remapping, the unavailable slice indicator may be omitted from the AM policy control update request message. As another example, in the case in which the unavailable slice indicator is included in the AM policy control update request message, and the V-PCF identifies a VPLMN S-NSSAI corresponding to the unavailable slice indicator, the VPLMN S-NSSAI may be omitted from the AM policy control update request message.

The allowed NSSAI may include changed allowed NSSAI information.

The mapping of the allowed NSSAI is information included when the UE in a roaming state, and indicates information associated with a H-PLMN S-NSSAI(s) to which the V-PLMN S-NSSAI(s) included in the allowed NSSAI are mapped, respectively.

In operation 303, the V-PCF recognizes an S-NSSAI that requires remapping based on the information received from the AMF in operation 302, and determines a new VPLMN S-NSSAI (i.e., a new S-NSSAI) for the network slice that requires remapping. The new VPLMN S-NSSAI is identification information of a network slice to replace the S-NSSAI that requires remapping.

A response message that the V-PCF transmits to the AMF in operation 303 may include a result and new S-NSSAI information.

The result refers to a result for the request of operation 302, and indicates success or failure of remapping.

The new S-NSSAI may be a new VPLMN S-NSSAI that the V-PCF selects/determines for the network slice that requires remapping. The new VPLMN S-NSSAI may be determined based on the allowed NSSAI included in the AM policy control update request message. For example, the new VPLMN S-NSSAI may be determined within the allowed NSSAI.

The AM policy association ID may be an identifier that identifies the AM policy association established with the PCF with respect to the UE.

In operation 304, the AMF is in the state of having already received the information associated with the PCF trigger of a change of remapped slice from the V-PCF according to the embodiment of FIG. 2, and in the case in which the AMF receives newly determined network slice information (i.e., a new S-NSSAI) from the V-PCF in operation 303 or directly determines new network slice information (i.e., a new S-NSSAI) although not receiving a new S-NSSAI from the V-PCF in operations 302 and 303, the AMF may be triggered based on the information associated with the PCF trigger of a change of remapped slice in operation 304, and may transmit, to the V-PCF, a UE policy control update request message including at least one of a UE policy association ID, an S-NSSAI that requires remapping, a new S-NSSAI, a mapping of a new S-NSSAI in operation 305. The mapping of a new S-NSSAI is included only when the UE is in the roaming state.

The UE policy association ID is an identifier that identifies the UE policy association established with the PCF with respect to the UE.

The information associated with the S-NSSAI that requires remapping is identifier information associated with a network slice that requires remapping. An indicator indicating a network slice that requires remapping may be additionally included in the UE policy control update request message.

The information associated with the mapping of an S-NSSAI that requires remapping refers to H-PLMN S-NSSAI information corresponding to an identifier of a network slice that requires remapping.

The new S-NSSAI may be a new VPLMN S-NSSAI that the V-PCF or AMF directly selects/determines for the network slice that requires remapping. The new VPLMN S-NSSAI may be determined based on the allowed NSSAI. For example, the new VPLMN S-NSSAI may be determined within the allowed NSSAI.

The mapping of a new-SNSSAI refers to H-PLMN S-NSSAI information corresponding to a newly selected/determined network slice (new S-NSSAI).

In operation 306, the V-PCF transmits the UE policy control update request message including the information received from the AMF in operation 305 to a corresponding H-PCF.

In operation 307, the H-PCF may identify the V-PLMN S-NSSAI and H-PLMN S-NSSAI of the network slice that requires remapping (e.g., an unavailable network slice) based on the information associated with the S-NSSAI that requires remapping and the mapping of an S-NSSAI that requires remapping, which are received in operation 306. In addition, based on the new S-NSSAI and the mapping of a new S-NSSAI information, received in operation 306, the H-PCF may identify the V-PLMN S-NSSAI and H-PLMN S-NSSAI of the newly selected network slice (new S-NSSAI).

In operation 307, the H-PCF may update a URSP rule (information transferred to the UE, and including a network slice required to be used for each UE traffic) based on the identified information, and may transfer a UE policy container including the updated URSP rule to the UE via the AMF according to a UE configuration update procedure.

In the updated URSP rule, an S-NSSAI that requires remapping may be deleted from lists of S-NSSAIs matching traffic or may be listed with a low priority, and a newly selected network slice (e.g., new S-NSSAI) may be used instead.

When the UE receives the updated URSP policy, the UE may determine, based on the updated URSP policy, which network slice's PDU session to use for transmission of traffic generated in the future.

In operation 308, the H-PCF transmits, to the V-PCF, a response message including a result for the request message of operation 306.

In operation 309, the V-PCF transmits, to the AMF, a response message including a result for the request message of operation 305.

In operation 310, the AMF may proceed with a procedure for moving a PDU session(s) (related to the S-NSSAI that requires remapping) included in the S-NSSAI that requires remapping to the new VPLMN S-NSSAI identified/selected in operation 307. In this instance, service continuity may be provided in a manner of generating a PDU session(s) in the new VPLMN S-NSSAI for each of the PDU session(s) associated with the S-NSSAI that requires remapping, and releasing the PDU session(s) associated with the S-NSSAI that requires remapping.

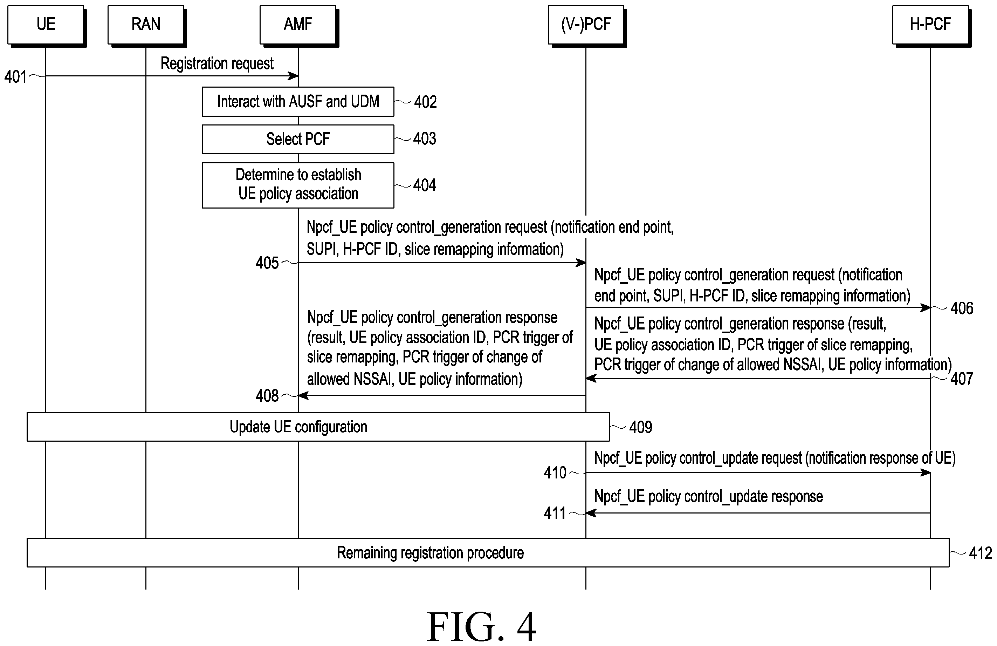

FIG. 4 is a diagram illustrating a method of installing a UE policy-based PCR trigger in order to support slice remapping in a UE registration procedure according to an embodiment of the disclosure. In the procedure of FIG. 4 based on a UE policy, operations 204 and 205 of FIG. 2 may be omitted compared to the procedure of FIG. 2 based on an AM policy.

In operation 401, in the UE registration procedure, a UE transmits a registration request message via a base station (RAN) and the RAN transfers the registration request message to an AMF.

In operation 402, when authentication of the UE is needed, the AMF performs authentication of the UE via an AUSF and a UDM that have been described with reference to FIG. 1.

In operation 403, the AMF performs PCF selection.

In this instance, the AMF may perform PCF selection and discovery by taking into consideration whether a PCF supports slice remapping. The AMF may use an NRF (not illustrated) to perform reception (i.e., discovery) of information associated with a PCF(s) to be selected, or may utilize information associated with a PCF(s) stored as configuration information in the UE when selecting a PCF(s).

In this instance, in the case in which the AMF performs PCF discovery via the NRF, and requests information associated with a PCF from the NRF (e.g., in the case of requesting information by using an NF discovery request), the AMF may operate as follows. When the AMF supports slice remapping, the AMF may include, in a request message transmitted to the NRF, information for requesting a PCF that supports slice remapping. When the information requesting a PCF that supports slice remapping is included in the request message obtained from the AMF, the NRF may identify/select a PCF(s) that supports slice remapping and transmit, to the AMF, a response message including information associated with the PCF(s) that supports slice remapping. In addition, in the case in which the UE is in a roaming state, the AMF may transmit the request message including information for requesting a PCF that supports slice remapping to a V-NRF, and the V-NRF may transmit, to a H-NRF, the request message or the information for requesting a PCF that supports slice remapping, may receive information associated with a H-PCF from the H-NRF, and may transfer the same to the AMF.

The AMF may perform an AMF policy association establishment procedure with the PCF selected in operation 403.

In operation 404, the AMF may determine to perform a UE policy association establishment procedure. When a (V-)PCF selected in the AM policy association exists (i.e., when a (V-)PCF selected in operation 403 exists), the AMF may select the corresponding PCF and use the same for UE policy association. When a (V-)PCF selected in operation 403 does not exist, the above-described PCF selection procedure may be performed in operation 403.

In operation 405, the AMF may transmit, to the selected (V-)PCF, a UE policy control generation request message (Npcf_UEPolicyControl_Create Request) including at least one of a notification endpoint, an SUPI, an H-PCF ID, and slice remapping information.

The notification endpoint indicates a network address of the AMF, and the SUPI indicates a UE's identifier (i.e., a UE ID).

The H-PCF ID may be included in the UE policy control generation request message when the UE is in a roaming state, and may be identifier information of a H-PCF. When the UE is not in the roaming state, operations 406 and 407 may be omitted.

The slice remapping information indicates whether the AMF supports slice remapping.

In operation 406, the V-PCF may transfer the UE policy control generation request message (Npcf_UEPolicyControl_Create Request) including the information received in operation 405 to a H-PCF corresponding to the H-PCF ID received from the AMF in operation 405.

In operation 407, based on the information received from the AMF, the H-PCF generates a UE policy association ID to identify UE policy association, and may generate UE policy information.

In this instance, although not illustrated in FIG. 4, the H-PCF may request subscription information associated with the UE from a UDR or UDM (in this instance, a UE ID is included in a request message) and may receive the subscription information associated with the UE, and the received subscription information may include information indicating a substitution S-NSSAI available for each S-NSSAI.

Specifically, a UE policy control generation response message (Npcf_UEPolicyControl_Create Response) that the H-PCF transmits to the AMF via the (V-)PCF may include at least one of a result, a UE policy association ID, a PCR trigger of slice remapping, a PCR trigger of a change of the allowed NSSAI, and UE policy information.

The result refers to a result for a request for generating UE policy association in operation 406, and may include a value indicating success or failure of the generation of the UE policy association.

The UE policy association ID refers to identifier information for identifying the generated UE policy association.

The PCR trigger of slice remapping is information for indicating/triggering the AMF's reporting of information associated with a network slice that requires remapping (information associated with an S-NSSAI that requires remapping) to the PCF when an unavailable network slice occurs.

When the UE is not in the roaming state, the AMF may report the information associated with the S-NSSAI that requires remapping to the PCF based on the PCR trigger of slice remapping. When the UE is in the roaming state, the AMF may report the information associated with the S-NSSAI that requires remapping to the V-PCF, and the V-PCF may transfer the information associated with the S-NSSAI that requires remapping to the H-PCF.

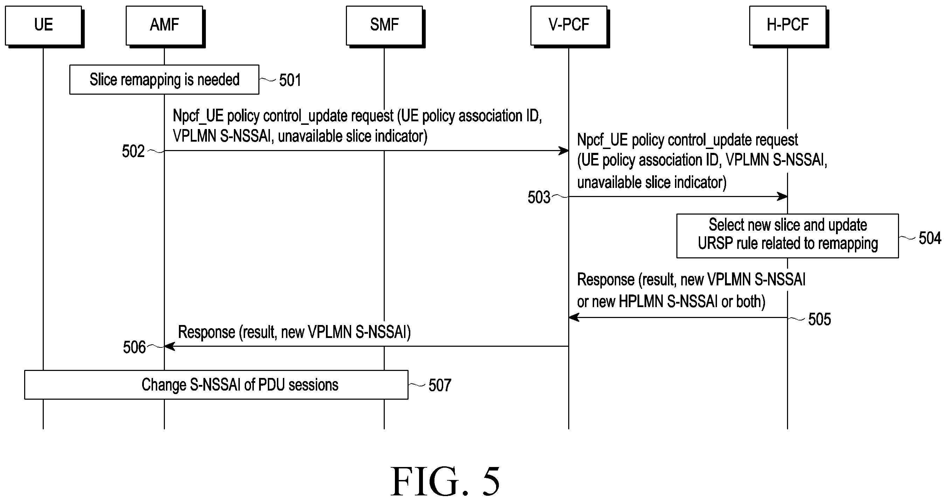

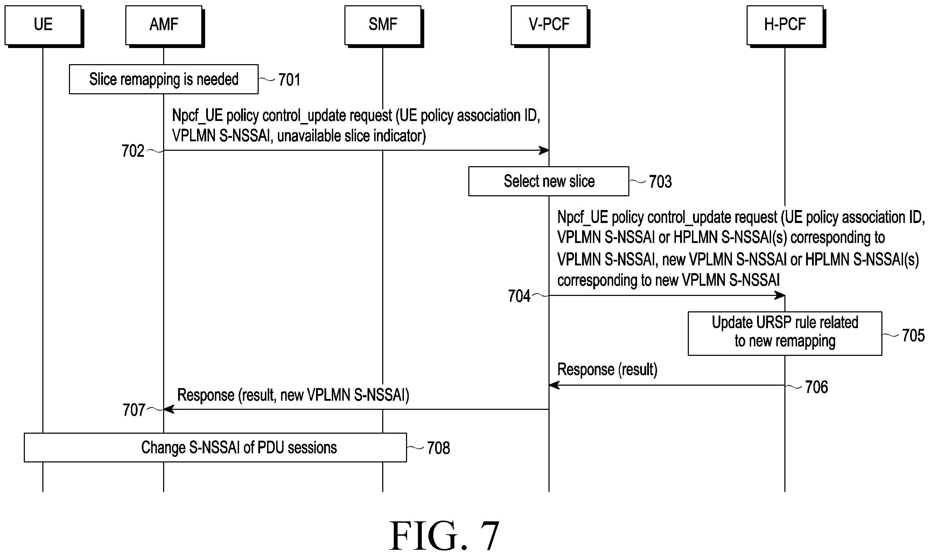

In the disclosure, a new network slice that is to replace a network slice that requires remapping may be determined by a H-PCF as in the example of FIG. 5 or a V-PCF as in the example of FIG. 7, which will be described later.

According to a method of determining, by the V-PCF, a new network slice for a network slice that requires remapping, the V-PCF that receives the UE policy control generation request message (Npcf_UEPolicyControl_Create Request) including information associated with an S-NSSAI that requires remapping from the AMF may determine/select a new network slice, and may transfer information associated with the new network slice to the H-PCF, and the H-PCF may provide information associated with the new network slice to the AMF via the V-PCF again. In this instance, when a network slice that requires remapping occurs, the AMF may provide, to the V-PCF, information associated with the network slice that requires remapping based on the PCR trigger of slice remapping received in advance from the V-PCF, and the V-PCF may determine a new network slice. Based on the PCF trigger of slice remapping, the V-PCF may transmit, to the H-PCF, information associated with the network slice that requires remapping and the network slice determined by the V-PCF, the H-PCF may transmit a response message to the V-PCF, and the V-PCF may provide the newly determined network slice information to the AMF. Based on the information associated with the network slice that requires remapping and the newly determined network slice, received from the V-PCF, the H-PCF may perform UE policy updating.

According to a method of determining, by the H-PCF, a new network slice for a network slice that requires remapping, the V-PCF that receives the UE policy control generation request message (Npcf_UEPolicyControl_Create Request) including the information associated with the S-NSSAI that requires remapping from the AMF may transfer the information associated with the S-NSSAI that requires remapping to the H-PCF, and the H-PCF may determine/select a new network slice and may provide information associated with the new network slice to the AMF via the V-PCF. In this instance, when a network slice that requires remapping occurs, the AMF may provide, to the V-PCF, information associated with the network slice that requires remapping based on the PCR trigger of slice remapping received in advance from the V-PCF, and the V-PCF may transfer the information associated with the network slice that requires remapping, received from the AMF, to the H-PCF based on the PCR trigger of slice remapping. The H-PCF may determine/select a new network slice to replace the network slice that requires remapping, and may transmit the information associated with the newly determined network slice to the AMF via the V-PCF. Based on the information associated with the network slice that requires remapping and the newly determined network slice, received from the V-PCF, the H-PCF may perform UE policy updating.

Among information included in a UE policy control generation response message (Npcf_UEPolicyControl_Create Response) that the H-PCF transmits to the AMF via (V-)PCF in operation 407, the PCR trigger of a change of the applied NSSAI is information for indicating/triggering, by the (V-)PCF, the AMF's reporting of changed allowed NSSAI when the allowed NSSAI is changed in the AMF.

When the PCR trigger of a change of the allowed NSSAI is received, the AMF may transmit a UE policy control update (Npcf_UEPolicyControl_Update) including the changed allowed NSSAI to the (V-)PCF when the allowed NSSAI (an allowed slice identifier list) is changed.

The UE policy information is information transferred to the UE, and may include at least one of an access network discovery and selection policy (ANDSP) rule including the UE's access network selection related information, and a URSP rule including information associated with mapping of an S-NSSAI and DNN related to a PDU session for transmission or reception of the UE's application traffic.

The UE policy information may be determined by the (H-)PCF according to a network operating policy.

In operation 408, the (V-)PCF may transfer, to the AMF, the UE policy control generation response message (Npcf_UEPolicyControl_Create Response) including the information received from the H-PCF.

When the UE is not in the roaming state, the (V-)PCF may act as a H-PCF in FIG. 4. In this instance, the (V-)PCF may operate in the same manner as the H-PCF of operation 407 and generate the above information, and the generated information may be included in the UE policy control generation response message transferred to the AMF.

In operation 409, a UE configuration update procedure is performed. In this instance, the AMF may transmit, to the UE via the base station (RAN), a UE policy container including the UE policy information received from the (V-)PCF.

Based on network slice selection policy (NSSP) information included in the URSP rule in the UE policy information, the UE may determine which S-NSSAI and DNN's PDU session to use for application traffic transmission.

In operation 410, when the (V-)PCF receives, from the UE, a notification response indicating reception of the UE policy container, the (V-)PCF may transmit a UE policy control update request message (Npcf_UEPolicyControl_Update Request) indicating the notification response to the H-PCF.

In operation 411, the H-PCF may transmit a UE policy control update response message (Npcf_UEPolicyControl_Update Response) to the (V-)PCF in response to the UE policy control update request message in operation 410.

In operation 412, the remaining UE registration procedure may be performed.

FIG. 5 is a diagram illustrating a method of determining a new network slice via a UE policy procedure when a network slice that requires remapping occurs according to an embodiment of the disclosure. In the embodiment of FIG. 5, it is assumed that an AMF has already received the information associated with a PCR trigger of slice remapping required and a PCR trigger of a change of the allowed NSSAI, which have been described with reference to the embodiment of FIG. 3. Therefore, the embodiment of FIG. 5 may be combined with the embodiment of FIG. 3.

In operation 501, the AMF recognizes that a situation that requires slice remapping has occurred (the situation that requires slice remapping may include, for example, the case in which an unavailable network slice occurs, the case in which a congested network slice occurs, the case in which a network slice planned to be terminated due to OAM occurs, the case in which a network slice that fails to satisfy an SLA occurs, or the like).

When the AMF recognizes that slice remapping is needed in operation 501, and information associated with a PCF trigger of slice remapping received from a V-PCF exists (i.e., upon receiving, from the V-PCF, information indicating that reporting to the V-PCF is needed when a situation that requires slice remapping occurs), the AMF may transmit, to the V-PCF, an AM policy control update request message (Npcf_UEPolicyControl_Update Request) including at least one of a UE policy association ID, a VPLMN S-NSSAI, an unavailable slice indicator, an allowed NSSAI, and a mapping of the allowed NSSAI in operation 502.

The UE policy association ID is an identifier that identifies the UE policy association established with the PCF with respect to a UE.

The VPLMN S-NSSAI and the unavailable slice indicator refer to identifier information associated with a network slice that requires remapping and an indicator indicating a network slice that requires remapping, respectively. As described above, information associated with an S-NSSAI that requires remapping may include at least one of the VPLMN S-NSSAI and the unavailable slice indicator. Therefore, as described in the embodiment of FIG. 3, one of the VPLMN S-NSSAI and the unavailable slice indicator may be omitted.

The allowed NSSAI may include changed allowed NSSAI information.

The mapping of the allowed NSSAI is information included when the UE is in a roaming state, and indicates information associated with a H-PLMN S-NSSAI(s) to which the V-PLMN S-NSSAI(s) included in the allowed NSSAI are mapped, respectively.

In operation 503, in an AM policy control update request message (Npcf_UEPolicyControl_Update Request) transmitted to a H-PCF, the V-PCF may include at least one of the UE policy association ID, the VPLMN S-NSSAI, the unavailable slice indicator, the allowed NSSAI, and the mapping of the allowed NSSAI received from the AMF in operation 502.

In operation 504, the H-PCF may identify mapping information between the V-PLMN S-NSSAI(s) and the H-PLMN S-NSSAI(s) needed for determining a network slice based on the information received from the V-PCF in operation 503, or based on the PCR trigger of a change of the allowed NSSAI provided in the UE policy association.

The H-PCF may identify an S-NSSAI(s) that requires remapping and a H-PLMN S-NSSAI(s) corresponding thereto, and may determine/select a new VPLMN S-NSSAI (i.e., a new VPLMN S-NSSAI) for the network slice that requires remapping and/or a new HPLMN S-NSSAI corresponding to the new VPLMN S-NSSAI.

In addition, the H-PCF may identify information associated with the S-NSSAI (i.e., the VPLMN S-NSSAI) that requires remapping and the newly determined VPLMN S-NSSAI (i.e., the new VPLMN S-NSSAI) to replace the VPLMN S-NSSAI, and information associated with the H-PLMN S-NSSAI and the new HPLMN S-NSSAI respectively corresponding to the VPLMN S-NSSAI that requires remapping and the new VPLMN S-NSSAI.

The H-PCF may update a URSP rule (information transferred to the UE, and including a network slice required to be used for each UE traffic) based on the identified information, and may transfer a UE policy container including the updated URSP rule to the UE via the AMF according to a UE configuration update procedure.

In the updated URSP rule, an S-NSSAI that requires remapping may be deleted from lists of S-NSSAIs matching traffic or may be listed with a low priority, and a newly selected network slice (new S-NSSAI) may be used instead.

When the UE receives the updated URSP policy, the UE may determine, based on the updated URSP policy, which network slice's PDU session to use for transmission of traffic generated in the future.

In operation 505, the H-PCF may include the network slice information (e.g., the new VPLMN S-NSSAI or new HPLMN S-NSSAI, or both) determined/selected/identified in operation 504 in a response message in response to operation 503.

In operation 506, the V-PCF may include slice information associated with the VPLMN (i.e., the new VPLMN S-NSSAI ) received in operation 505 in a response message in response to operation 502.

In operation 507, the AMF may proceed with a procedure for moving a PDU session(s) (related to the S-NSSAI that requires remapping) included in the S-NSSAI that requires remapping to the new VPLMN S-NSSAI determined/selected/identified in operation 504. In this instance, service continuity may be provided in a manner of generating a PDU session(s) in the new VPLMN S-NSSAI for each of the PDU session(s) associated with the S-NSSAI that requires remapping and releasing the PDU session(s) associated with the S-NSSAI that requires remapping.

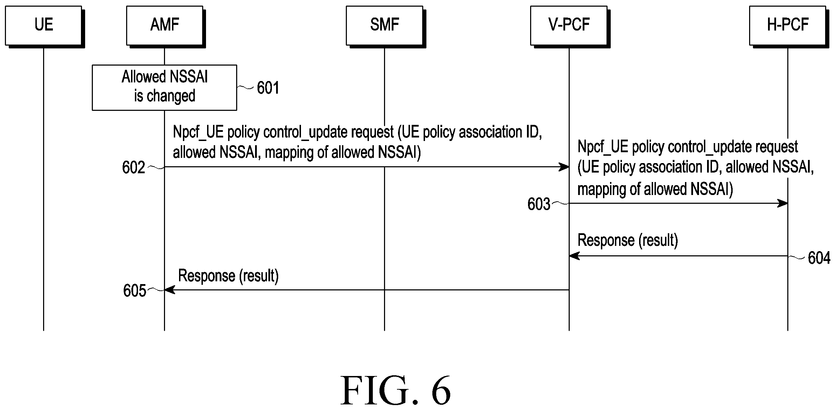

FIG. 6 is a diagram illustrating a method of reporting a change of an allowed NSSAI to a H-PCF via a UE policy procedure when the allowed NSSAI is changed according to an embodiment of the disclosure. The embodiment of FIG. 6 may be performed when the AMF that receives the information associated with the PCR trigger of a change of the allowed NSSAI from the (V-)PCF in the embodiment of FIG. 2 or FIG. 4 identifies that the allowed NSSAI has been changed. Therefore, the embodiment of FIG. 6 may be combined with the embodiment of FIG. 2 or FIG. 4.

In operation 601, an AMF recognizes that an allowed NSSAI has been changed.

When the AMF recognizes that the allowed NSSAI is changed in operation 601 (i.e., when a new S-NSSAI is added to or deleted from the allowed NSSAI, or is changed) and a PCF trigger of a change of the allowed NSSAI that the AMF receives from a V-PCF exists as described in the examples of FIG. 2 or FIG. 4, the AMF may transfer, to the V-PCF, a UE policy control update request message (Npcf_UEPolicyControl_Update Request) including at least one of a UE policy association ID, an allowed NSSAI, and a mapping of the allowed NSSAI in operation 602.

In this instance, operation 603 and operation 604 may be applicable when a UE is in a roaming state.

The UE policy association ID is an identifier that identifies the UE policy association established with the PCF with respect to the UE.

The allowed NSSAI may include changed allowed NSSAI information.

The mapping of the allowed NSSAI is information included in the UE policy control update request message when the UE is in the roaming state, and indicates information associated with a H-PLMN S-NSSAI(s) to which the V-PLMN S-NSSAI(s) included in the allowed NSSAI are mapped, respectively.

When the UE is in the roaming state, the V-PCF transfers the information received from the AMF in operation 602 to a H-PCF in operation 603.

Based on the UE policy association ID or based on a H-PCF ID when the H-PCF ID is included in the UE policy control update request message received in operation 602, the V-PCF may determine/identify the H-PCF to which the message is to be transmitted.

In operation 604, the H-PCF may identify how the allowed NSSAI of the UE in the roaming state is changed based on the allowed NSSAI received from the V-PCF in operation 603, and may identify a H-PLMN S-NSSAI(s) to which the corresponding allowed NSSAIs are mapped based on the mapping of the allowed NSSAI. Subsequently, the H-PCF transmits a response message including a UE policy update result to the V-PCF in operation 604.

In operation 605, the V-PCF transmits, to the AMF, a response message including the UE policy update result received from the H-PCF.

FIG. 7 is a diagram illustrating a method of determining, by a (V-)PCF, a new network slice via a UE policy procedure when a network slice that requires remapping occurs according to an embodiment of the disclosure. The embodiment of FIG. 7 may be combined with the embodiment of FIG. 4 when the method of determining, by a V-PCF, a new network slice for a network slice that requires remapping is used in the embodiment of FIG. 4.

In operation 701, an AMF recognizes that a situation that requires slice remapping has occurred (the situation that requires slice remapping may include, for example, the case in which an unavailable network slice occurs, the case in which a congested network slice occurs, the case in which a network slice planned to be terminated due to OAM occurs, the case in which a network slice that fails to satisfy an SLA occurs, or the like).

When the AMF recognizes that slice remapping is needed in operation 701, and information associated with a PCF trigger of slice remapping received from a V-PCF exists (i.e., upon receiving, from the V-PCF, information indicating that reporting to the V-PCF is needed when a situation that requires slice remapping occurs), the AMF may transmit, to the V-PCF, an AM policy control update request message (Npcf_UEPolicyControl_Update Request) including at least one of a UE policy association ID, a VPLMN S-NSSAI, an unavailable slice indicator, an allowed NSSAI, and a mapping of the allowed NSSAI in operation 702.

The UE policy association ID is an identifier that identifies the UE policy association established with the PCF with respect to a UE.

The VPLMN S-NSSAI and the unavailable slice indicator refer to identifier information associated with a network slice that requires remapping and an indicator indicating a network slice that requires remapping, respectively. One of the VPLMN S-NSSAI and the unavailable slice indicator may be omitted as described above.

The allowed NSSAI may include changed allowed NSSAI information.

The mapping of the allowed NSSAI is information included when the UE is in the roaming state, and indicates information associated with a H-PLMN S-NSSAI(s) to which the V-PLMN S-NSSAI(s) included in the allowed NSSAI are mapped, respectively.

In operation 703, the V-PCF may determine/select a new VPLMN S-NSSAI (i.e., new VPLMN S-NSSAI) for the network slice that requires remapping based on the information received from the AMF in operation 702.

In operation 704, the V-PCF may transmit, to the H-PCF, a UE policy control update request message (Npcf_UEPolicyControl_Update Request) including at least one of a UE policy association ID, a VPLMN S-NSSAI or H-PLMN S-NSSAI(s) that corresponds to the VPLMN S-NSSAI, a new VPLMN S-NSSAI, or a H-PLMN S-NSSAI(s) that corresponds to the new VPLMN S-NSSAI. In this instance, when the UE policy control update request message that the V-PCF transmits to the H-PCF includes the new VPLMN S-NSSAI, the UE policy control update request message may include the H-PLMN S-NSSAI(s) that correspond to the new VPLMN S-NSSAI.

As another example, the V-PCF may include only information associated with the H-PLMN S-NSSAI(s) that corresponds to the new VPLMN S-NSSAI in the UE policy control update request message transmitted to the H-PCF.

The UE policy association ID is an identifier that identifies the UE policy association established with the PCF with respect to the UE.

The VPLMN S-NSSAI refers to the information associated with a slice that requires remapping that the V-PCF receives from the AMF in operation 702.

The H-PLMN S-NSSAI(s) that corresponds to the VPLMN S-NSSAI refers to the information associated with the HPLMN S-NSSAI(s) corresponding to the VPLMN S-NSSAI.

The new VPLMN S-NSSAI refers to information associated with a newly selected VPLMN S-NSSAI to replace the VPLMN S-NSSAI in operation 703.

The H-PLMN S-NSSAI(s) that corresponds to the new VPLMN S-NSSAI refers to information associated with a HPLMN S-NSSAI(s) corresponding to the newly selected VPLMN S-NSSAI.

In operation 705, based on the information received from the V-PCF in operation 704, the H-PCF may identify information associated with the S-NSSAI that requires remapping and the newly selected S-NSSAI. That is, the S-NSSAI that requires remapping and the H-PLMN S-NSSAI(s) respectively corresponding to the newly selected VPLMN S-NSSAI may be identified, and a UE policy for the UE may be updated based on the identified information. Specifically, the H-PCF may update a URSP rule including information associated with a mapping between application traffic and an S-NSSAI and DNN in the UE policy, and may transmit the updated URSP policy to the UE.

In operation 706, the H-PCF may transmit, to the V-PCF, a response message including a result for the request message of operation 704.

In operation 707, the V-PCF transmits, to the AMF, a response message that includes a result for the request message of operation 702 and the newly selected S-NSSAI (i.e., the new VPLMN S-NSSAI) for the S-NSSAI that requires remapping.

In operation 708, the AMF may proceed with a procedure for moving a PDU session(s) (related to the S-NSSAI that requires remapping) included in the S-NSSAI that requires remapping to the new VPLMN S-NSSAI received in operation 707. In this instance, service continuity may be provided in a manner of generating a PDU session(s) in the new VPLMN S-NSSAI for each of the PDU session(s) associated with the S-NSSAI that requires remapping and releasing the PDU session(s) associated with the S-NSSAI that requires remapping.

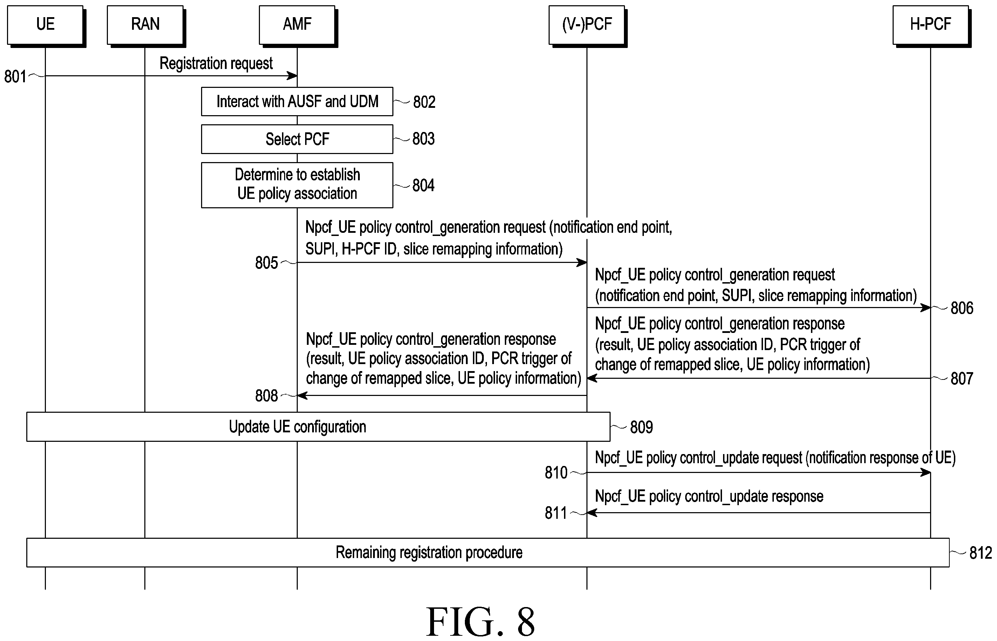

FIG. 8 is a diagram illustrating a method of installing a UE policy-based PCR trigger in order to support AMF-based slice remapping in a UE registration procedure according to an embodiment of the disclosure.

In operation 801, in the UE registration procedure, a UE transmits a registration request message via a base station (RAN) and the RAN transfers the registration request message to an AMF.

In operation 802, when authentication of the UE is needed, the AMF performs authentication of the UE via an AUSF and a UDM that have been described with reference to FIG. 1.

In operation 803, the AMF performs PCF selection.

In this instance, the AMF may perform PCF selection and discovery by taking into consideration whether a PCF supports slice remapping. The AMF may use an NRF (not illustrated) to perform reception (i.e., discovery) of information associated with a PCF(s) to be selected, or may utilize information associated with a PCF(s) stored in the UE as configuration information when selecting a PCF(s).

In this instance, in the case in which the AMF performs PCF discovery via the NRF, and requests information associated with a PCF from the NRF (e.g., in the case of requesting information by using an NF discovery request), the AMF may operate as follows. When the AMF supports slice remapping, the AMF may include, in a request message transmitted to the NRF, information for requesting a PCF that supports slice remapping. When the information requesting a PCF that supports slice remapping is included in the request message obtained from the AMF, the NRF may identify/select a PCF(s) that supports slice remapping, and transmit, to the AMF, a response message including information associated with the PCF(s) that supports slice remapping. In addition, in the case in which the UE is in a roaming state, the AMF may transmit a request message including information for requesting a PCF that supports slice remapping to a V-NRF, and the V-NRF may transmit, to a H-NRF, the request message or the information for requesting a PCF that supports slice remapping, may receive information associated with a H-PCF from the H-NRF, and may transfer the same to the AMF.

The AMF may perform an AMF policy association establishment procedure with the PCF selected in operation 803.

In operation 804, the AMF may determine to perform a UE policy association establishment procedure. When a (V-)PCF selected in the AM policy association exists (i.e., when a (V-)PCF selected in operation 803 exists), the AMF may select the corresponding PCF and use the same for UE policy association. When a (V-)PCF selected in operation 803 does not exist, the above-described PCF selection procedure may be performed in operation 803.

In operation 805, the AMF may transmit, to the selected (V-)PCF, a UE policy control generation request message (Npcf_UEPolicyControl_Create Request) including at least one of a notification endpoint, an SUPI, a H-PCF ID, and slice remapping information.

The notification endpoint indicates a network address of the AMF, and the SUPI indicates a UE's identifier (i.e., a UE ID).

The H-PCF ID may be included in the UE policy control generation request message when the UE is in the roaming state, and may be identifier information of a H-PCF. When the UE is not in the roaming state, operations 806 and 807 may be omitted.

The slice remapping information indicates whether the AMF supports slice remapping.

In operation 806, the V-PCF may transfer the UE policy control generation request message (Npcf_UEPolicyControl_Create Request) including the information received in operation 805 to a H-PCF corresponding to the H-PCF ID received from the AMF in operation 805.

In operation 807, based on the information received from the AMF, the H-PCF generates a UE policy association ID to identify UE policy association, and may generate UE policy information.

In this instance, although not illustrated in FIG. 8, the H-PCF may request subscription information associated with the UE from a UDR or UDM (in this instance, a UE ID is included in a request message), and may receive the subscription information associated with the UE.

Specifically, a UE policy control generation response message (Npcf_UEPolicyControl_Create Response) that the H-PCF transmits to the AMF in operation 807 may include at least one of a result, a UE policy association ID, a PCR trigger of a change of a remapped slice, and UE policy information.

The result refers to a result of a request for generating the UE policy association in operation 806, and may include a value indicating success or failure of the generation of the UE policy association.

The UE policy association ID refers to identifier information for identifying the generated UE policy association.

The PCR trigger of a change of a remapped slice may be information indicating that the AMF needs to report, to the (H-)PCF via the (V-)PCF, information associated with a network slice that requires remapping and a newly determined network slice (i.e., a remapped slice) to replace the corresponding network slice when the network slice that requires remapping occurs. When information associated with the network slice that requires remapping and the remapped slice is received, the (H-)PCF may update a UE policy or the like when it is needed.

That is, after receiving the PCR trigger of a change of a remapped slice from the H-PCF via the V-PCF, when a situation that requires slice remapping occurs (e.g., when an available network slice occurs, a congested network slice occurs, a network slice planned to be terminated due to an OAM occurs, a network slice that fails to satisfy an SLA occurs, or the like), the AMF may determine a remapped slice (e.g., the new VPLMN S-NSSAI) to replace the network slice that requires remapping, and may report, to the PCF, identifier information of the network slice that requires remapping and identifier information of the determined remapped slice.

When the UE is not in the roaming state, the AMF may report, to the PCF, the identifier information of the network slice that requires remapping and the identifier information of the remapped slice determined/selected by the AMF. When the UE is in the roaming state, the AMF may report, to the V-PCF, the identifier information of the network slice that requires remapping and the identifier information of the remapped slice determined/selected by the AMF, and the V-PCF may report, to the H-PCF, the information received from the AMF.

The UE policy information is information transferred to the UE, and may include at least one of an ANDSP rule including the UE's access network selection related information, and a URSP rule including information associated with a mapping of a PDU session for transmission or reception of the UE's application traffic and a related S-NSSAI and DNN.

The UE policy information may be determined by the (H-)PCF according to a network operating policy.

In operation 808, the (V-)PCF may transfer, to the AMF, the UE policy control generation response message (Npcf_UEPolicyControl_Create Response) including the information received from the H-PCF.

When the UE is not in the roaming state, the (V-)PCF may act as a H-PCF in FIG. 8. In this instance, the (V-)PCF may operate in the same manner as the H-PCF in operation 807 and generate the above information, and the generated information may be included in the UE policy control generation response message transferred to the AMF.

In operation 809, a UE configuration update procedure is performed. In this instance, the AMF may transmit, to the UE via the base station (RAN), a UE policy container including the UE policy information received from the (V-)PCF.

Based on network slice selection policy (NSSP) information included in the URSP rule in the UE policy information, the UE may determine which S-NSSAI and DNN's PDU session to use for application traffic transmission.

In operation 810, when the V-PCF receives, from the UE, a notification response indicating reception of the UE policy container, the (V-)PCF may transmit a UE policy control update request message (Npcf_UEPolicyControl_Update Request) indicating the notification response to the H-PCF.

In operation 811, the H-PCF may transmit a UE policy control update response message (Npcf_UEPolicyControl_Update Response) to the (V-)PCF in response to the UE policy control update request message in operation 810.

In operation 812, the remaining UE registration procedure may be performed.

According to the above-described embodiments of the disclosure, in the 5G system, a UE may efficiently determine a new network slice(s) to replace a network slice(s) that has a problem/is unavailable when the UE is in or not in a roaming state, and may move the UE's traffic to the new network slice(s), thereby securing service continuity. In addition, according to the embodiments of the disclosure, a URSP rule indicating a network slice required to be used for each traffic may be updated based on the network slice(s) that has a problem/is unavailable and the new network slice(s).

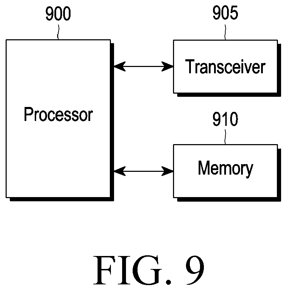

FIG. 9 is a diagram illustrating a configuration of a network entity in a wireless communication system according to an embodiment of the disclosure. The network entity of FIG. 9 may be one of the network entities described in the embodiments of FIGS. 1 to 8, such as a UE, an RAN, an AMF, an SMF, a PCF(V-PCF or H-PCF), or the like.

As illustrated in FIG. 9, a network entity may include a processor 900, a transceiver 905, and memory 910. According to a communication method of a network entity that has been described with reference to the embodiments of FIGS. 1 to 8, the processor 900, the transceiver 905, and the memory 910 of the network entity may operate. However, the components of the network entity are not limited to the above-descried example. For example, the network entity may include more or fewer components than the above-described components. In addition, the processor 900, the transceiver 905, and the memory 910 may be embodied as at least one chip.

The transceiver 905 is a collective name of a receiver of the network entity and a transmitter of the network entity, and signal transmission or reception with a UE or another network entity may be performed via the transceiver 905. The transmitted or received signal may include at least one of control information and data. To this end, the transceiver 905 may include an RF transmitter that up-converts and amplifies the frequency of a transmitted signal, an RF receiver that low-noise amplifies a received signal and down-converts the frequency of the signal, and the like. This is merely an example of the transceiver 905, and components of the transceiver 905 are not limited to an RF transmitter and an RF receiver. The transceiver 905 may include a wired and/or wireless transceiver, and may include various configurations for signal transmission or reception. In addition, the transceiver 905 may receive a signal via a communication interface defined in the 3GPP standard, may output the same to the processor 900, and may transmit a signal output from the processor 900. In addition, the transceiver 905 may receive a communication signal and output the same to the processor 900, and may transmit a signal output from the processor 900 to a UE or another network entity via a network. The memory 905 may store programs and data needed for operating the network entity according to at least one of the embodiments of FIGS. 1 to 8. In addition, the memory 910 may store control information and/or data included in a signal obtained by the network entity. The memory 910 may be embodied as a storage medium such as a ROM, a RAM, a hard disk, a CD-ROM, a DVD, and the like, or a combination of storage media. The processor 900 may control a series of processes for operating the network entity according to at least one of the embodiments of FIGS. 1 to 8. The processor 900 may include at least one processor. Methods disclosed in the claims and/or methods according to the embodiments described in the specification of the disclosure may be implemented by hardware, software, or a combination of hardware and software. When the processor 900 is implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device. Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by an access and mobility management function (AMF) in a wireless communication system that supports a network slice, the method comprising:
receiving, by the AMF, a registration request message from a terminal;
selecting, by the AMF, a first policy control function (PCF) that supports network slice remapping related to the terminal;
transmitting, by the AMF to the first PCF, a first policy control request message including information indicating, to the first PCF, whether the AMF supports the network slice remapping; and
receiving, by the AMF from the first PCF, a first policy control response message including first trigger information related to the network slice remapping, in response to the transmission of the first policy control request message,
wherein the first trigger information indicates that, in case that at least one first network slice that requires the network slice remapping occurs in the AMF, the AMF needs to transmit information associated with the at least one first network slice to the first PCF.

2. The method of claim 1, comprising:
in case that the terminal is in a roaming state, transmitting, by the AMF to a second PCF in a home network via the first PCF in a visited network, a second policy control request message including the information indicating whether the AMF supports the network slice remapping; and
receiving, by the AMF, a second policy control response message including second trigger information related to the network slice remapping from the second PCF via the first PCF,
wherein the second trigger information indicates that the AMF needs to transmit, to the second PCF, the information associated with the at least one first network slice and information associated with at least one second network slice to replace the at least one first network slice.

3. The method of claim 1, wherein the first policy control response message further comprises third trigger information indicating that, in case that at least one allowed network slice (allowed single-network slice selection assistance information (allowed NSSAI)) is changed in the AMF, the AMF needs to transmit, to the first PCF, information associated with the change..

4. The method of claim 1, further comprising:
in case that the AMF identifies a situation that requires the network slice remapping, transmitting, by the AMF to the first PCF, a first policy control update request message including information associated with the at least one first network slice based on the first trigger information; and
receiving, by the AMF from the first PCF, a response message including information associated with at least one second network slice to replace the at least one first network slice in response to the policy control update request message.

5. The method of claim 1, wherein the information associated with the at least one first network slice comprises at least one of identification information of the at least one first network slice, and an indicator indicating that the at least one first network slice is a network slice that requires the network slice remapping.

6. The method of claim 4, further comprising:
transmitting, by the AMF to the first PCF, a second policy control update request message including the information associated with the at least one first network slice, first home-public land mobile network (H-PLMN) S-NSSAI information corresponding to an identifier of the at least one first network slice, the information associated with the at least one second network slice, and second H-PLMN S-NSSAI information corresponding to an identifier of the at least one second network slice.

7. The method of claim 1, wherein the at least one second network slice to replace the at least one first network slice is determined by the AMF or the first PCF.

8. An access and mobility management function (AMF) in a wireless communication system that supports a network slice, the AMF comprising:
a transceiver; and
a processor configured to
receive a registration request message from a terminal via the transceiver,
select a first policy control function (PCF) that supports network slice remapping related to the terminal,
transmit, to the first PCF via the transceiver, a first policy control request message including information indicating, to the first PCF, whether the AMF supports the network slice remapping, and
receive, from the first PCF via the transceiver, a first policy control response message including first trigger information related to the network slice remapping in response to the transmission of the first policy control request message,
wherein the first trigger information indicates that, in case that at least one first network slice that requires the network slice remapping occurs in the AMF, the AMF needs to transmit information associated with the at least one first network slice to the first PCF.

9. The AMF of claim 8, wherein the AMF is applied to operate according to a method of one of claims 2 to 7.

10. A method performed by a first policy control function (PCF) in a wireless communication system that supports a network slice, the method comprising:
receiving, by the first PCF that supports network slice remapping, a first policy control request message including information indicating whether an access and mobility management function (AMF) supports the network slice remapping from the AMF that receives a registration request message from a terminal; and
transmitting, by the first PCF, a first policy control response message including first trigger information related to the network slice remapping to the AMF in response to the reception of the first policy control request message,
wherein the first trigger information indicates that, in case that at least one first network slice that requires the network slice remapping occurs in the AMF, the AMF needs to transmit information associated with the at least one first network slice to the first PCF.

11. The method of claim 10, comprising:
receiving, by the first PCF of a visited network from the AMF, a second policy control request message including the information indicating whether the AMF supports the network slice remapping; and
transmitting, by the first PCF to the AMF, a second policy control response message which includes second trigger information related to the network slice remapping, and is received from a second PCF of a home network,
wherein the second trigger information indicates that the AMF transmits, to the second PCF, the information associated with the at least one first network slice and information associated with at least one second network slice to replace the at least one first network slice.

12. The method of claim 10, wherein the first policy control response message further comprises third trigger information indicates that, in case that at least one allowed network slice (allowed single-network slice selection assistance information (allowed NSSAI)) is changed in the AMF, the AMF transmits, to the first PCF, information associated with the change.

13. The method of claim 10, further comprising:
receiving, by the first PCF from the AMF, a first policy control update request message including information associated with the at least one first network slice based on the first trigger information; and
transmitting, by the first PCF to the AMF, a response message including information associated with at least one second network slice to replace the at least one first network slice in response to the policy control update request message.

14. A first policy control function (PCF) in a wireless communication system that supports a network slice, the first PCF comprising:
a transceiver; and
a processor configured to
receive, via the transceiver, a first policy control request message including information indicating whether an access and mobility management function (AMF) supports network slice remapping from the AMF that receives a registration request message from a terminal, and
transmit, via the transceiver, a first policy control response message including first trigger information related to the network slice remapping to the AMF in response to the reception of the first policy control request message,
wherein the first trigger information indicates that, in case that at least one first network slice that requires the network slice remapping occurs in the AMF, the AMF transmits information associated with the at least one first network slice to the first PCF.

15. The first PCF of claim 14, wherein the first PCF is applied to operate according to a method of one of claims 11 to 13.
